# EUROPÄISCHE PATENTSCHRIFT

(11) **EP 2 388 111 B1**
(45) Veröffentlichungstag und Bekanntmachung des Hinweises auf die Patenterteilung: **17.02.2021**
(21) Anmeldenummer: 11161370.9
(22) Anmeldetag: 06.04.2011
(51) Int. Cl.: B25J 9/16

(54) **Roboter und Verfahren zum Betreiben eines Roboters**
Robot and method for operating a robot
Robot et procédé de fonctionnement d'un robot

(30) Priorität: 19.04.2010 DE 102010015407
(43) Veröffentlichungstag der Anmeldung: 23.11.2011
(73) Patentinhaber: KUKA Deutschland GmbH, 86165 Augsburg (DE)
(72) Erfinder: Wecker, Thomas, 89344 Aislingen (DE); Keyl, Hartmut, 86161 Augsburg (DE); Ueberle, Marc-Walter, 86316 Friedberg (DE)
(74) Vertreter: Schlotter, Alexander Carolus Paul

(56) Entgegenhaltungen:
- EP-A2- 0 086 432
- EP-A2- 0 188 109
- EP-A2- 1 600 833
- DD-A1- 229 642
- DE-A1- 3 151 831
- US-A- 4 851 748

## Beschreibung

Die Erfindung betrifft einen Roboter und ein Verfahren zum Betreiben eines Roboters.

Ein Beispiel eines Roboters ist ein Industrieroboter. Diese sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Industrieroboter weisen im Wesentlichen einen Roboterarm mit mehreren Achsen und Hebeln auf, die von geregelten elektrischen Antrieben bewegt werden. Die geregelten elektrischen Antriebe umfassen z.B. einen Synchronmotor, insbesondere einen permanent erregten Synchronmotor, der von einem Umrichter mittels einer Regelvorrichtung angesteuert wird. Im Fehlerfall soll die Bewegung des Roboters so schnell wie möglich gestoppt werden.

Aufgabe der Erfindung ist es, ein verbessertes Verfahren zum Betreiben eines Roboters anzugeben, aufgrund dessen der Verfahrweg des Roboters im Fehlerfall verringert werden kann.

EP 1 600 833 A2 offenbart einen Roboter, insbesondere einen Mehrachs-Industrieroboter, in dessen Betrieb, insbesondere beim Betrieb in Anwesenheit von Menschen, vorgesehen ist, dass zumindest ein Bahnabschnitt überwacht in einer Referenzfahrt durchfahren wird, dass bewegungscharakteristische Betriebswerte kontinuierlich gemessen und als Referenzwerte gespeichert werden und dass im Betrieb der Maschine ebenfalls diese Betriebswerte erfasst und mit den gespeicherten Referenzwerten verglichen werden.

DE 31 51 831 A1 offenbart ein Verfahren zum Ermitteln eines abnormalen Überlastzustandes bei einer Robotersteueranordnung zur Steuerung eines Roboters auf der Grundlage von Instruktionsdaten. Ein Motor zum Antrieb des Roboters besitzt obere und untere Grenzwerte für seinen Antriebsstrom oder seine Antriebsleistung, die im voraus festgesetzt werden. Wenn dann der Roboter in der "play-back"-Betriebsart arbeitet, wird der Wert des Antriebsstromes ständig überwacht, und eine Operation zur Prüfung durchgeführt, ob der Wert des Motorantriebsstroms innerhalb des Bereiches der gesetzten Grenzwerte liegt, so daß eine abnormale Überbelastung festgestellt werden kann. Gemäß dem Verfahren nach der Erfindung wird eine Instruktion zum Prüfen des Motorantriebsstromes im voraus an geeigneter Stelle in die Instruktionsdaten eingesetzt. Wird dann diese Instruktion gelesen, dann wird eine Entscheidungsoperation durchgeführt, um zu bestimmen, ob der Antriebsstrom innerhalb des Bereiches der Grenzwerte liegt.

EP 0 086 432 A2 befasst sich mit Industrierobotern und stellt fest, dass diese für das Bedienungspersonal eine über das bei Be- und Verarbeitungsmaschinen übliche Maß hinausgehende Gefahr darstellen, die aus der freien Programmierbarkeit der Bewegungen resultiert. Gemäß dieser Druckschrift werden diese Gefahren üblicherweise durch Schutzeinrichtungen abgewendet, die jedoch zum Programmieren oder Warten des Industrieroboters außer Betrieb gesetzt werden müssen. Weiter stellt diese Druckschrift fest, dass zur Verringerung der Gefahr meist ein Schleichgang und/oder Tippschaltung für die Steuerung vorgesehen wird, was jedoch nicht ausschließt, daß unkontrollierte Bewegungen durch Fehler oder Fehlbedienung ausgelöst werden können. Die Druckschrift offenbart, dass für diese Fälle eine Sicherheitsschaltung vorgesehen ist, die bei Betreten des Arbeitsfeldes eingeschaltet wird und die bei unkontrollierten Bewegungen des Industrieroboters diesen unmittelbar stillsetzt. Die beim Programmierbetrieb noch zulässige Geschwindigkeit der Antriebsmotoren wird überwacht und bei Überschreitung derselben eine unmittelbare Abschaltung der Energiezufuhr zu den Endstufen der Antriebsmotoren vorgenommen.

EP 0 188 109 A2 offenbart ein Roboter-Steuerungssystem für einen Roboter mit einer Arbeitsachse und einem Servomotor. Die Druckschrift offenbart, dass eine Einrichtung zur Erfassung von Positionsfehlern der Arbeitsachse betrieben wird und dass eine Abweichung der Ist-Position in Bezug auf eine gewünschte momentane Position erfasst wird, und dass eine Antriebsschaltung die Positionsabweichung empfängt, um dem Servomotor einen Strom zuzuführen, um die Positionsabweichung zu reduzieren. Das Steuersystem hat Mittel zum Begrenzen des von der Antriebsschaltung an den Servomotor gelieferten Stroms, um dadurch das Drehmoment des Servomotors zu begrenzen, wenn der Servomotor die Arbeitsachse in einem ersten Modus antreibt, in dem die Bewegung der Arbeitsachse einer unerwünschten Behinderung unterliegt.

US 4,851,748 offenbart einen Roboter, der einen Arm mit mehreren motorisch angetriebenen Gelenken aufweist. Ein Leistungsverstärker versorgt jeden Gelenkmotor mit Antriebsstrom. Entsprechende digitale Regelkreisanordnungen erzeugen Spannungsbefehle, aus denen Signale zum Betrieb der Leistungsverstärker erzeugt werden.

Die Erfindung ist in den unabhängigen Ansprüchen definiert. Weitere Merkmale der Erfindung sind in den abhängigen Ansprüchen angegeben.

Vorliegend offenbart wird ein Verfahren zum Betreiben eines Roboters, der wenigstens ein Glied, das gesteuert von einer Steuervorrichtung des Roboters mittels eines geregelten elektrischen Antriebs bewegbar ist, und der geregelte elektrische Antrieb einen zumindest indirekt mit dem Glied mechanisch gekoppelten Elektromotor, ein den Elektromotor ansteuerndes Stellglied und eine das Stellglied ansteuernde Regelvorrichtung umfasst, aufweisend ein roboterapplikationsspezifisches dynamisches Begrenzen des Wertes der Führungs- und/oder Stellgröße der Regelvorrichtung. Die Führungsgröße kann insbesondere dem zum Bewegen des Elektromotors vorgesehenen elektrischen Strom zugeordnet sein.

Auch offenbart wird ein Roboter, aufweisend wenigstens ein Glied, das gesteuert von einer Steuervorrichtung des Roboters mittels eines geregelten elektrischen Antriebs bewegbar ist, und der geregelte elektrische Antrieb einen zumindest indirekt mit dem Glied mechanisch gekoppelten Elektromotor, ein den Elektromotor ansteuerndes Stellglied und eine das Stellglied ansteuernde Regelvorrichtung aufweist, deren Führungsgröße dem zum Bewegen des Elektromotors vorgesehenen elektrischen Strom zugeordnet ist, aufweist, und die Steuervorrichtung eingerichtet ist, den Wert der Führungs- und/oder Stellgröße der Regelvorrichtung gemäß dem erfindungsgemäßen Verfahren roboterapplikationsspezifisch dynamisch zu begrenzen.

Der Roboter kann vorzugweise ein Industrieroboter oder ein Leichtbauroboter sein. Der erfindungsgemäße Roboter kann insbesondere einen Roboterarm mit dem Glied und weiteren, nacheinander folgenden, mittels Gelenken verbundene Glieder, sowie weitere dem geregelten elektrischen Antrieb entsprechende elektrische Antriebe, deren Elektromotoren mit den weiteren Gliedern zumindest indirekt mechanisch gekoppelt sind, aufweisen, wobei die Steuervorrichtung eingerichtet ist, die Werte der Führungs- und/oder Stellgrößen der Regelvorrichtungen der weiteren geregelten elektrischen Antrieben gemäß dem erfindungsgemäßen Verfahren roboterapplikationsspezifisch dynamisch zu begrenzen.

Gemäß dem erfindungsgemäßen Verfahren wird das Glied mittels des geregelten elektrischen Antriebs bewegt. Mittels der Regelvorrichtung kann z.B. die Position des Gliedes geregelt werden. Die Führungsgröße der Regelvorrichtung ist vorzugsweise dem elektrischen Strom des Elektromotors zugeordnet, d.h. mittels der Führungsgröße der Regelvorrichtung wird insbesondere der elektrische Strom des elektrischen Motors geregelt. Da erfindungsgemäß die Führungsgröße und/oder die Stellgröße der Regelvorrichtung dynamisch bzw. applikationsspezifisch begrenzt werden, werden somit gegebenenfalls auch der maximale elektrische Strom und/oder gegebenenfalls die maximale Versorgungsspannung des Elektromotors dynamisch bzw. applikationsspezifisch begrenzt. Somit wird erreicht, dass beispielsweise im Fehlerfall gegebenenfalls der Verfahrweg des Roboters verringert wird bei gegebenenfalls gleichzeitiger Berücksichtigung beispielsweise der momentan erforderlichen Kraft- und Beschleunigungskapazität des Roboters.

Der roboterapplikationsspezifischen dynamischen Begrenzung des Wertes der Führungs- und/oder Stellgröße der Regelvorrichtung kann beispielsweise eine erforderliche Geschwindigkeit eines Tool Center Points des Roboters für die Applikation und/oder einem Arbeitsschritt während der Bewegung des Roboters, einer aktuellen Pose des Roboters, einer Sicherheitsanforderung für die Applikation und/oder einem Arbeitsschritt während der Bewegung des Roboters, einem Abstand zu einer kritischen externen Struktur, der insbesondere messtechnisch ermittelt wird, einer erforderlichen Kraftkapazität für die Applikation und/oder einem Arbeitsschritt während der Bewegung des Roboters, und/oder einem Lastparameter eines am Roboter befestigten Instruments zugrunde gelegt werden.

Der geregelte elektrische Antrieb umfasst das Stellglied, das insbesondere eine elektrische Spannung zum Antreiben des Elektromotors erzeugt. Dann kann vorzugsweise die Stellgröße der Regelvorrichtung dieser elektrischen Spannung zugeordnet sein. Geeignete Stellglieder sind z.B. Umrichter oder Wechselrichter.

Der geregelte elektrische Antrieb kann eine innere und eine äußere Regelschleife umfassen. Dann ist die Regelvorrichtung vorzugsweise Teil der inneren Regelschleife.

Der Elektromotor kann gemäß einer Variante des erfindungsgemäßen Verfahrens bzw. des erfindungsgemäßen Roboters ein Wechselstrommotor sein. Der Wechselstrommotor kann insbesondere ein Drehstrommotor und/oder ein Synchronmotor sein. Als Synchronmotor kann vorzugsweise ein permanent erregter Synchronmotor verwendet werden. Wird ein Drehstrommotor verwendet, dann kann der elektrische Antrieb vorzugsweise basierend auf der feldorientierten Regelung geregelt werden.

Es ist aber auch möglich, dass als Elektromotor ein Gleichstrommotor verwendet wird. Dann kann vorzugsweise die Regelvorrichtung bzw. der geregelte elektrische Antrieb auf dem Stromleitverfahren basieren.

Gemäß einer Ausführungsform des erfindungsgemäßen Verfahrens weist dieses folgende Verfahrensschritte:
- Durchführen einer Bahnplanung mittels der Steuervorrichtung des Roboters, um eine Bewegung des Roboters zu planen, und
- Begrenzen des Werts der Führungs- und/oder Stellgröße der Regelvorrichtung aufgrund der von der Steuervorrichtung durchgeführten Bahnplanung.

Gemäß dieser Ausführungsform ist es gegebenenfalls vorgesehen, den Wert der Führungsgröße und/oder der Stellgröße der Regelvorrichtung während der Bewegung des Roboters in Abhängigkeit von der Bahnplanung zu ändern, insbesondere zu regeln. Je nach Applikation kann somit gegebenenfalls der maximal erlaubte Wert des Motorstroms zur Laufzeit der Bewegung des Roboters variiert werden. Bei geplanten Bewegungen, bei denen z.B. die Achswinkelgeschwindigkeit in Abhängigkeit der Zeit bekannt sind, kann damit auch die Abhängigkeit der maximal notwendigen elektrischen Spannung von der Zeit ermittelt und damit auch vorgesteuert werden.

Nach einer weiteren Variante des erfindungsgemäßen Verfahrens kann dieses ein Bestimmen eines aufgrund der Bahnplanung maximal benötigten Wertes der Führungs- und/oder Stellgröße der Regelvorrichtung aufweisen, der insbesondere der höchsten Geschwindigkeitsanforderung der der Bahnplanung zugrunde gelegten Bewegung des Roboters oder des mit dem elektrischen Antrieb bewegten Gliedes zugeordnet ist, und ein Begrenzen des Wertes der Führungs- und/oder Stellgröße der Regelvorrichtung auf den maximal benötigten Wert der Führung- und/oder Stellgröße der Regelvorrichtung vor der Durchführung der der Bahnplanung zugeordneten Bewegung des Roboters erfolgen.

Im Rahmen dieser Variante des erfindungsgemäßen Verfahrens kann ein Berechnen für die Bahnplanung entsprechender Werte der Führungs- und/oder Stellgröße der Regelvorrichtung und während der Durchführung der der Bahnplanung zugeordneten Bewegung des Roboters oder des mit dem elektrischen Antrieb bewegten Gliedes und entsprechend ein Begrenzen des Wertes der Führungs- und/oder Stellgröße der Regelvorrichtung während der Bewegung vorgesehen sein.

Nach einer weiteren Ausführungsform des erfindungsgemäßen Verfahrens weist dieses ein Begrenzen des Wertes der Führungs- und/oder Stellgröße der Regelvorrichtung auf einen Maximalwert aufgrund einer maximal zulässigen Nutzlast und/oder Geschwindigkeit der der Bewegung zugeordneten Applikation vor der Bewegung auf. Gemäß dieser Ausführungsform wird demnach vor Beginn der Applikation der Maximalwert der Führungs- und/oder Stellgröße basierend auf der während der Applikation zulässigen maximalen Nutzlast und/oder Geschwindigkeit limitiert. Diese Begrenzungen können für unterschiedliche Arbeitsschritte innerhalb des applikationsspezifischen Workflows auf unterschiedliche Werte festgelegt werden. Der Geschwindigkeitsmaximalwert wird während der Bewegung nicht überschritten. Somit wird sichergestellt, dass das vom Elektromotor bewegte Glied bzw. die von den Elektromotoren bewegten Glieder die maximale Geschwindigkeit nicht überschreiten können.

Die Steuerungsarchitektur des erfindungsgemäßen Roboters kann folgendermaßen realisiert sein: Die Stromregelung erfolgt auf der Antriebselektronik. Gegebenenfalls eine übergeordnete Regelung, z.B. Positionsregelung kann auf einer separaten übergeordneten Recheneinheit erfolgen. Gegebenenfalls die Berechnung der Stromgrenzen, d.h. die Berechnung des Maximalwertes der Führungsgröße kann vorzugsweise in sicherer Technik erfolgen, beispielsweise auf einer Sicherheitssteuerung des Roboters.

Der erfindungsgemäße Roboter ist als medizinischer Roboter ausgeführt. Die Anpassung der Führungsgröße der Regelvorrichtung kann beispielsweise folgendermaßen erfolgen:
Vor Beginn einer medizinischen Operation mit dem Roboter wird die erforderliche Kraftkapazität und die Sicherheitsanforderung, beispielsweise der Verfahrweg im Fehlerfall, für die aktuelle Applikation und deren Arbeitsschritte beispielsweise in Form einer Tabelle in sicherer Technik (z.B. über FSoE) an die Sicherheitssteuerung übermittelt. Ebenso werden die Lastdaten der verwendeten Instrumente in sicherer Technik an die Sicherheitssteuerung übergeben.

Während der Operation werden in sicherer Technik die Gelenkwinkel des Roboters erfasst und sowohl das momentan befestigte Instrument (z.B. durch instrumentenspezifische Kontaktmatrix oder RFID) als auch der Arbeitsschritt im Applikations-Workflow (z.B. durch Betätigung von sicheren Zustimmtastern) identifiziert. Diese Daten werden in sicherer Technik an die Sicherheitssteuerung übermittelt.

Es können die Stromgrenzen für die einzelnen Motoren in den Gelenken auf der Sicherheitssteuerung ermittelt werden. Dies kann beispielsweise über eine Rechenvorschrift oder über eine zuvor ermittelte Tabelle erfolgen.

Es ist auch möglich, den Abstand des TCPs des Roboters zu einer kritischen Struktur messtechnisch zu erfassen und als Eingangsvariable zur Ermittlung der Stromgrenzen auf der Sicherheitssteuerung zu verwenden.

Es kann eine sichere Übertragung der Stromgrenzen an die Antriebselektroniken vorgesehen sein.

Es kann eine nichtsichere Übertragung der Stromgrenzen an die übergeordnete Steuerungseinheit, wenn vorgesehen, vorgesehen sein. Eine sicherheitsgerichtete Übertragung kann z.B. dann nicht notwendig sein, wenn die übergeordnete Steuerung nicht in sicherer Technik realisiert ist.

Die dynamische Begrenzung der Führungsgröße und somit des Motorstroms kann z.B. folgendermaßen realisiert werden:
Begrenzung der Soll-Ströme durch angepasste Steuerungsalgorithmen auf der übergeordneten, insbesondere nicht sicherheitsgerichteten, Recheneinheit der Steuervorrichtung. Somit kann eine Erhöhung der Verfügbarkeit erreicht werden, da bei Verletzung der Begrenzung der kommandierten Ströme auf der Antriebselektronik ein Notstopp eingeleitet werden kann. Auf der Antriebselektronik kann eine Prüfung der durch die übergeordnete Recheneinheit berechneten Soll-Ströme auf Einhaltung der Stromgrenze vorgesehen sein. Eine Einleitung eines Notstopps bei Verletzung der Stromgrenze kann ebenfalls vorgesehen sein.

Es kann gegebenenfalls eine Prüfung des vorzugsweise in sicherer Technik gemessenen Ist-Stroms auf der Antriebselektronik auf Einhaltung der Stromgrenze vorgesehen sein. Eine Einleitung eines Notstopps kann bei Verletzung der Stromgrenze durchgeführt werden.

Es kann der erwartete Ist-Strom auf der Antriebselektronik unter Verwendung eines Modells der Regelvorrichtung bzw. des entsprechenden Stromregelkreises berechnet werden. Ein Vergleich des erwarteten Ist-Stroms mit dem gemessenen Ist-Strom kann vorgenommen werden. Eine Einleitung eines Notstopps bei Überschreitung einer definierten Abweichung kann vorgesehen sein.

Es kann der tatsächliche Ist-Strom mittels elektrischer Sicherung begrenzt werden.

Je nach Ausführungsform erreicht man mit dem erfindungsgemäßen Verfahren, dass der Verfahrweg des Roboters im Fehlerfall beispielsweise mittels dynamisch limitierbarer physikalischer Begrenzung der Abtriebsgeschwindigkeit der einzelnen Achsen begrenzt wird. Diese können vorzugsweise derart limitiert werden, sodass die Bewegungsgeschwindigkeit des Roboters den Erfordernissen der aktuellen Applikation angepasst ist. Diese Limitierung kann bei bekannten Bewegungen, wie z.B. Fräsen, auch während der Laufzeit der Applikation variiert werden, um z.B. die Geschwindigkeit der einzelnen Achsen immer auf die maximal notwendige Geschwindigkeit zu limitieren.

Bei Applikationen, bei denen die genaue Bewegung zur Laufzeit noch nicht bekannt ist, kann die Bewegungsgeschwindigkeit zu Beginn auf einen maximalen, für diese Applikation sinnvollen Wert gesetzt werden. Beispielsweise bei der groben Vorpositionierung dürfen die maximalen Geschwindigkeiten relativ hoch, bei der Feinpositionierung des Endeffektors des Roboters jedoch nur relativ gering sein.

Das erfindungsgemäße Verfahren bietet gegebenenfalls eine dynamische Anpassung der physikalischen Begrenzung der maximalen Geschwindigkeit des TCPs. Applikationsabhängig kann diese Beschränkung sogar noch zur Laufzeit der Applikation möglich sein, beispielsweise bei geplanten Bewegungen.

Mögliche Einflussgrößen für die Anpassung der Abtriebsgeschwindigkeit der einzelnen Achsen sind beispielsweise erforderliche Geschwindigkeit des TCP für Applikation und Arbeitsschritt, aktuelle Pose des Roboters, Sicherheitsanforderung für die aktuelle Applikation und des aktuellen Arbeitsschritts, ein Abstand zu einer kritischen Struktur, der insbesondere messtechnisch erfasst wird.

Ist die Stellgröße der Regelvorrichtung der elektrischen Spannung des Motors, insbesondere dessen Soll-Spannung, zugeordnet, dann können im Falle einer gewollten Begrenzung der Drehzahl des Motors auf eine maximale Drehzahl, insbesondere eine dynamischen Beschränkung der maximalen Motorspannung, die von der Regelvorrichtung berechneten Spannungssollwerte, d.h. die Stellgrößen der Regelvorrichtung, auf einen dynamisch einstellbaren Wert überwacht bzw. begrenzt werden. Die Geschwindigkeitsgrenzen können vorzugsweise in sicherer Technik auf der gegebenenfalls vorhandenen Sicherheitssteuerung der Steuerungsvorrichtung erfolgen.

Die Begrenzung der Spannungsbegrenzung, d.h. für diese Ausführungsform die Begrenzung der Stellgröße der Regelvorrichtung kann z.B. folgendermaßen realisiert werden:
- Vor Beginn oder auch während einer Applikation, insbesondere einer Operation im Falle eines als medizinischen Roboter ausgeführten Roboters wird die erforderliche Geschwindigkeit und/oder die Sicherheitsanforderung, beispielsweise der Verfahrweg im Fehlerfall, für die Applikation und deren Arbeitsschritte beispielsweise in Form einer Tabelle in sicherer Technik an die Steuervorrichtung, gegebenenfalls an deren Sicherheitssteuerung übermittelt.
- Während der Applikation, gegebenenfalls der Operation, werden insbesondere in sicherer Technik die Gelenkwinkel des Roboters erfasst und sowohl das momentan befestigte Instrument z.B. durch instrumentenspezifische Kontaktmatrix oder RFID als auch der Arbeitsschritt im Applikations-workflow z.B. durch Betätigung von sicheren Zustimmtastern identifiziert. Diese Daten werden insbesondere in sicherer Technik an die Steuervorrichtung, gegebenenfalls deren Sicherheitssteuerung übermittelt.
- Geschwindigkeitsgrenzen für die einzelnen Motoren werden in den Gelenken vorzugsweise auf der Sicherheitssteuerung ermittelt. Diese kann beispielsweise über eine Rechenvorschrift oder über eine zuvor ermittelte Tabelle erfolgen.
- In einer bevorzugten Ausführung kann der Abstand des TCPs zu einer kritischen Struktur messtechnisch erfasst und als Eingangsvariable zur Ermittlung der Geschwindigkeitsbeschränkung auf der Sicherheitssteuerung verwendet.
- Eine sichere Übertragung der Geschwindigkeitsgrenzen kann an die Antriebselektroniken erfolgen.
- Eine nichtsichere Übertragung der Geschwindigkeitsgrenzen kann an eine gegebenenfalls vorhandene übergeordnete Steuerungseinheit erfolgen.

Für die Variante, gemäß derer die Stellgröße der Regelvorrichtung der Motorspannung zugeordnet ist, kann z.B. die Begrenzung der Stellgröße, die vorzugsweise auf der Sicherheitssteuerung und vorzugsweise in sicherer Technik an die Regelvorrichtung übertragen wird, wie folgt erfolgen:
Der Spannungssollwerte der Regelvorrichtung, d.h. deren Stellgröße wird überwacht und begrenzt. Diese Beschränkung kann vor oder während der Laufzeit der Applikation getrennt für jede Achse gesetzt werden. Die aktuelle Spannungsgrenze kann von der übergeordneten Sicherheitssteuerung mittels angepasster Algorithmen errechnet werden. Um die Dynamik der Regelvorrichtung nicht unnötig einzuschränken, kann die Beschränkung vorzugsweise so ausgelegt werden, dass sie für einen relativ kurzen Zeitraum die Überschreitung der Grenzspannung erlaubt, z.B. für die Dauer des Einschwingvorganges des elektrischen Stromes.

Ausführungsbeispiele der Erfindung sind exemplarisch in den beigefügten schematischen Zeichnungen dargestellt. Es zeigen:
- Fig. 1: einen Industrieroboter mit mehreren Gliedern, die mittels geregelter elektrischer Antriebe bewegbar sind, und
- Fig. 2: einen der geregelten elektrischen Antriebe.

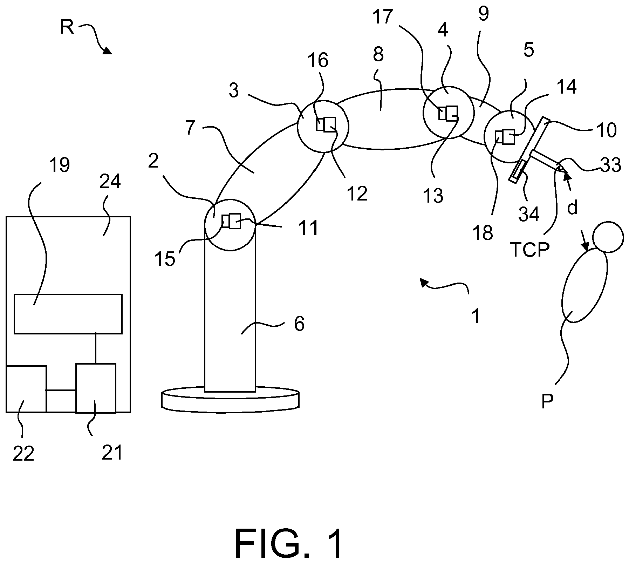

Die Figur 1 zeigt einen Industrieroboter R mit einem Roboterarm 1. Der Industrieroboter R ist insbesondere als ein Leichtbauroboter ausgeführt. Der Roboterarm 1, der im Falle des vorliegenden Ausführungsbeispiels eine Bewegung in sechs oder sieben Freiheitsgraden erlaubt, stellt im Wesentlichen den beweglichen Teil des Industrieroboters R dar und umfasst in allgemein bekannter Weise Gelenke 2 bis 5, Hebel bzw. Glieder 6 bis 9 und einen Flansch 10, an dem ein Endeffektor 33 befestigt werden kann. Den Gelenken 2-5 sind jeweils entsprechende Achsen zugeordnet, bezüglich derer die Glieder 6 bis 9 drehbar bewegt werden können.

Der Industrieroboter R ist als medizinischer Industrieroboter R ausgebildet. Der Endeffektor 33 ist dann z.B. als medizinisches Instrument ausgebildet, mit dem der Industrieroboter R ein Lebewesen P behandeln kann.

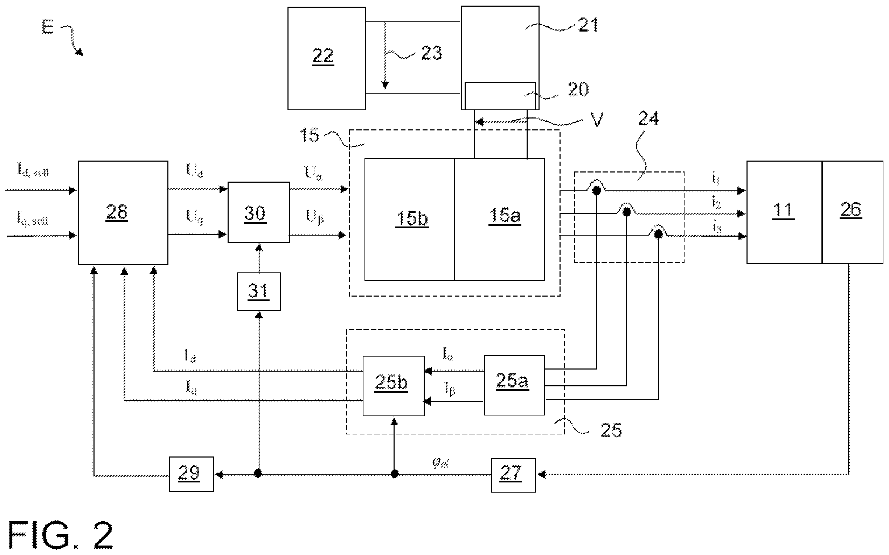

Jedes der Gelenke 2-5 wird mit einem geregelten elektrischen Antrieb E, von denen einer in der Fig. 2 gezeigt ist, bewegt. Die elektrischen Antrieb E weisen jeweils einen elektrischen Motor 11 bis 14 auf. Die Motoren 11-14 sind z.B. Wechselstrommotoren, insbesondere Drehstrommotoren. Im Falle des vorliegenden Ausführungsbeispiels handelt es sich bei den Motoren 11-14 um Synchronmotoren, insbesondere um permanent erregte Synchronmotoren.

Den Motoren 11-14 sind jeweils ein Umrichter 15-18 bzw. ein Drehstrom-Wechselrichter vorgeschaltet, der aus einer Gleichspannung V eine dreiphasige Wechselspannung variabler Frequenz erzeugt, mit der die entsprechenden Motoren 11-14 beaufschlagt werden. Wechselrichter bzw. Umrichter sind dem Fachmann im Prinzip bekannt und umfassen einen Leistungsteil 15a, z.B. drei Halbbrücken, die beispielsweise Transistoren, insbesondere MOSFETs umfassen, und eine Ansteuerelektronik 15b.

Im Falle des vorliegenden Ausführungsbeispiels sind die Umrichter 15-18 an den jeweiligen Motoren 11-14, zumindest im oder am Roboterarm 1 befestigt.

Die Gleichspannung V wird im Fall des vorliegenden Ausführungsbeispiels von einem einzigen Zwischenkreis 20 bereitgestellt, mit dem alle Umrichter 15-18 verbunden sind. Der Zwischenkreis 20 umfasst z.B. einen Zwischenkreiskondensator und ist im Falle des vorliegenden Ausführungsbeispiels Teil eines Gleichspannungswandlers 21, der auch als DC/DC Konverter bezeichnet wird. Gleichspannungswandler sind dem Fachmann im Prinzip bekannt und erzeugen aus einer z.B. mittels eines Gleichrichters 22 aus der Netzspannung geglätteten Gleichspannung 23 die Gleichspannung V.

Im Falle des vorliegenden Ausführungsbeispiels sind der Gleichrichter 22 und vor allem der Gleichspannungswandler 21 in einem Steuerschrank 24 angeordnet, in dem z.B. auch eine Steuervorrichtung 19 des Industrieroboters R angeordnet ist. Die Steuervorrichtung 19 übernimmt im Falle des vorliegenden Ausführungsbeispiels auch die Regelung der elektrischen Antriebe E. Auf der Steuervorrichtung 19 läuft ein Rechenprogramm, das im Betrieb des Industrieroboters R die elektrischen Antriebe E, insbesondere die Umrichter 15-18 ansteuert, sodass der Roboterarm 1 bzw. der Flansch 10 eine vorbestimmte Bewegung durchläuft.

Es kann auch eine Abstandsvorrichtung 34 vorgesehen sein, wie dies im Falle des vorliegenden Ausführungsbeispiels der Fall ist. Die Abstandsvorrichtung 34 ist in nicht dargestellter Weise mit der Steuervorrichtung 19 verbunden und ist eingerichtet, einen Abstand d zwischen dem Endeffektor 33, insbesondere dessen Tool Center Points TCP, und einer kritischen Struktur, z.B. der Oberfläche des Lebewesens P zu ermitteln.

Im Falle des vorliegenden Ausführungsbeispiels werden die elektrischen Antriebe E mittels feldorientierter Regelung, die auch als Vektorregelung bezeichnet wird, geregelt. Je nach Ausführung werden die elektrischen Motoren 11-14 z.B. drehzahl- oder positionsgeregelt. Die geregelten elektrischen Antrieb E basieren im Falle des vorliegenden Ausführungsbeispiels auf der im Prinzip dem Fachmann bekannten feldorientierten Regelung, die jedoch gemäß den Ansprüchen modifiziert ist. Bei der feldorientierten Regelung werden die dreiphasigen Ströme und Spannungen in rotierende Strom- und Spannungszeiger transformiert und für die Regelung verwendet.

Im Falle des vorliegenden Ausführungsbeispiels ist beispielsweise die Regelung des elektrischen Antriebs E in der Steuervorrichtung 19 implementiert und die Fig. 2 zeigt Funktionsblöcke dieser Regelung. Diese Regelung umfasst insbesondere eine elektrische Stromregelung, die insbesondere als eine unterlagerte Regelung ausgeführt ist.

Wie bereits obenstehend beschrieben, erzeugt der Leistungsteil 15a des Umrichters 15 eine dreiphasige Spannung, welche dem Motor 11 zugeführt wird. Somit fließt durch die Wicklungen des Motors 11 ein dreiphasiger Wechselstrom (Drehstrom) i_{1,2,3,} der z.B. mittels einer Strommessvorrichtung 24 gemessen wird. Die Messvorrichtung 24 ist wiederum mit einer Transformationsvorrichtung 25 verbunden, die, wie es dem Fachmann im Prinzip bekannt ist, zunächst mittels eines Transformationsblocks 25a die gemessenen dreiphasigen Motorströme in statorfeste Strom-Raumzeiger mit den Komponenten I_{α} und I_{β} transformiert, die synchron mit dem Rotor des Motors 11 rotieren. Um die Größen auf den Rotor des Motors 11 zu beziehen, werden die statorfesten Strom-Raumzeiger auf das rotorfeste d, q-Koordinatensystem anschließend mittels eines weiteren Transformationsblock 25b transformiert, wodurch die Raumzeigerkomponenten I_{d} und I_{q} entstehen. Diese Transformation umfasst eine Verdrehung um einen Winkel Zₚ*ϕ* (Polzahl des Motors 11 multipliziert mit dem mechanischen Läuferwinkel). Der mechanische Läuferwinkel wird beispielsweise mittels eines Drehgebers 26 ermittelt und wird mittels eines Skalierungsblocks 27 mit der Polzahl des Motors 11 multipliziert, wodurch der elektrische Läuferwinkel *ϕₑₗ* entsteht.

Im Falle des vorliegenden Ausführungsbeispiels werden die Raumzeigerkomponenten I_{d,q} einem Stromregler 28 zugeführt, der z.B. als sogenannter PI-Regler ausgeführt ist. Dieser kann insbesondere ein analoger Regler oder auch ein digitaler Regler sein. Außerdem kann, wie es im Falle des vorliegenden Ausführungsbeispiels der Fall ist, das Ausgangssignal des Skalierungsblocks 27 einem Tiefpassfilter 29 zugeführt, dessen Ausgangssignal ebenfalls dem Stromregler 28 zugeführt werden kann.

Weitere Eingangssignale des Stromreglers 28 bzw. die Führungsgrößen des Stromreglers 28 sind im Falle des vorliegenden Ausführungsbeispiels Soll-Werte für die Strom-Raumzeigerkomponenten I_{d, soll} und I_{q, soll}. Im Falle des vorliegenden Ausführungsbeispiels ist der Soll-Wert für I_{d, soll} gleich Null.

Im Falle des vorliegenden Ausführungsbeispiels sind die Ausgangssignale bzw. die Stellgrößen des Stromreglers 28 auf den Rotor des Motors 11 bezogene Spannungen U_{d,q}, die mittels eines Transformationsblocks 30 in den auf den Stator des Motors 11 bezogene Spannungen U_{α,β} transformiert werden. Für dese Transformation wird im Falle des vorliegenden Ausführungsbeispiels noch der um 180° Phasen verschobene elektrische Läuferwinkel *ϕₑₗ* dem Transformationsblock 30 zugeführt, der mittels eines Phasendrehblocks 31 berechnet wird.

Die auf den Stator des Motors 11 bezogene Spannungen U_{α,β} sind im Falle des vorliegenden Ausführungsbeispiels die Eingangssignale des Umrichters 15 bzw. dessen Ansteuerelektronik 15b, welche z.B. basierend der Puls-Weiten-Modulation den Leistungsteil 15a des Umrichters 15 ansteuert, sodass dieser die gewollte dreiphasige elektrische Spannung für den Motor 11 erzeugt.

Um z.B. den Verfahrweg des Industrieroboters R in einem Fehlerfall, d.h. eine Bewegung des Roboterarms 1 im Fehlerfall zu verringern, ist im Falle des vorliegenden Ausführungsbeispiels die Steuervorrichtung 19 derart ausgeführt bzw. ist das auf der Steuervorrichtung laufende Rechenprogramm zum Steuern des Roboterarms 1 derart ausgeführt, dass der Motorstrom i_{1,2,3} überwacht und/oder begrenzt wird. Dies wird insbesondere durch eine dynamische Anpassung der Strombegrenzung beispielsweise an den Arbeitsschritt des Workflows insbesondere einer medizinischen Applikation, an die Roboterpose und/oder die Lastparameter des am Industrieroboter R befestigten Endeffektors 33 realisiert. Hierbei ist auch eine Verkleinerung, wenn nicht gar Minimierung des Verfahrwegs im Fehlerfall bei gleichzeitiger Berücksichtigung der momentan erforderlichen Kraft- und Beschleunigungskapazität des Roboters R möglich.

Um den Motorstrom i_{1,2,3} dynamisch bzw. roboterapplikationsspezifisch zu begrenzen, ist die Steuervorrichtung 19 derart ausgeführt, dass sie die Werte der Führungsgrößen des Stromreglers 28 roboterapplikationsspezifisch dynamisch begrenzt. Insbesondere begrenzt die Steuervorrichtung 19 den Wert der Führungsgröße I_{q, soll} des Stromreglers 28.

Im Falle des vorliegenden Ausführungsbeispiels kann die Steuervorrichtung 19 derart eingerichtet sein, dass das roboterapplikationsspezifische dynamische Begrenzen des Wertes der Führungsgröße I_{q, soll} des Stromreglers 28 beispielsweise auf einer erforderlichen Geschwindigkeit des Tool Center Points TCP des Industrieroboters R für die Applikation und/oder einem Arbeitsschritt während der Bewegung des Industrieroboters R, einer aktuellen Pose des Industrieroboters R, einer Sicherheitsanforderung für die Applikation und/oder einem Arbeitsschritt während der Bewegung des Industrieroboters R, dem Abstand d zum Lebewesen P, die insbesondere messtechnisch mittels der Abstandsmessvorrichtung 34 ermittelt wird, einer erforderlichen Kraftkapazität für die Applikation und/oder einem Arbeitsschritt während der Bewegung des Industrieroboters R, und/oder einem Lastparameter des am Industrieroboters R befestigten Endeffektors 33 zugrunde gelegt wird.

Die Steuervorrichtung 19 kann im Falle des vorliegenden Ausführungsbeispiels auch derart ausgeführt sein, dass sie zunächst eine Bahnplanung durchführt, um eine Bewegung des Industrieroboters R zu planen. Anschließend begrenzt sie den Wert der Führungsgröße I_{q, soll} des Stromreglers 28 aufgrund der durchgeführten Bahnplanung.

Gegebenenfalls ist die Steuervorrichtung 19 derart ausgeführt, dass sie den Wert der Führungsgröße I_{q, soll} des Stromreglers 28 während der Bewegung des Industrieroboters R in Abhängigkeit von der Bahnplanung ändert.

Die Steuervorrichtung 19 kann aber auch derart ausgeführt sein, dass sie einen maximal benötigten Wert der Führungsgröße I_{q, soll} des Stromreglers 28 aufgrund der Bahnplanung bestimmt, der insbesondere der höchsten Geschwindigkeitsanforderung der der Bahnplanung zugrunde gelegten Bewegung des Industrieroboters R oder des mit dem elektrischen Antrieb E bewegten Gliedes zugeordnet ist. Die Steuervorrichtung 19 insbesondere begrenzt dann den Wert der Führungsgröße I_{q, soll} des Stromreglers 28 auf den maximal benötigten Wert vor der Durchführung der der Bahnplanung zugeordneten Bewegung des Industrieroboters R.

Im Rahmen dieser Begrenzung kann die Steuervorrichtung 19 auch derart eingerichtet sein, dass sie den für die Bahnplanung entsprechenden Wert der Führungsgröße I_{q, soll} des Stromreglers 28 berechnet und während der Durchführung der der Bahnplanung zugeordneten Bewegung des Industrieroboters R oder des mit dem elektrischen Antrieb E bewegten Gliedes den Wert der Führungsgröße I_{q, soll} des Stromreglers 28 während der Bewegung des Industrieroboters R dynamisch begrenzt, also entsprechend der geplanten Bewegung die Begrenzung variiert.

Je nach Applikation kann die Steuervorrichtung 19 auch eingerichtet sein, den Wert der Führungsgröße I_{q, soll} des Stromreglers 28 auf einen Maximalwert aufgrund einer maximal zulässigen Geschwindigkeit der der Bewegung zugeordneten Applikation vor der Bewegung des Industrieroboters R zu begrenzen. Dieser Maximalwert wird während der Bewegung nicht überschritten.

Die Anpassung der Führungsgröße I_{q, soll} des Stromreglers 28 durch die Steuervorrichtung 19 kann beispielsweise auch folgendermaßen erfolgen:
Vor Beginn einer medizinischen Operation des Lebewesens P mit dem Industrieroboters R mittels des Endeffektors 33 wird die erforderliche Kraftkapazität und die Sicherheitsanforderung, beispielsweise der Verfahrweg im Fehlerfall, für die aktuelle Applikation und deren Arbeitsschritte beispielsweise in Form einer Tabelle in sicherer Technik an die Steuervorrichtung 19 übermittelt. Ebenso werden die Lastdaten des verwendeten Endeffektors 33 insbesondere in sicherer Technik an die Steuervorrichtung 19 übergeben.

Während der Operation werden insbesondere in sicherer Technik die Gelenkwinkel des Industrieroboters R erfasst und sowohl der momentan befestigte Endeffektor 33 als auch der Arbeitsschritt im Applikations-Workflow identifiziert. Diese Daten werden insbesondere in sicherer Technik an die Steuervorrichtung 19 übermittelt.

In einem alternativen Ausführungsbeispiel ist die Steuervorrichtung 19 eingerichtet, den Wert der Stellgrößen U_{d,q} des Stromreglers 28 roboterapplikationsspezifisch dynamisch zu begrenzen, um z.B. den Verfahrweg des Industrieroboters R in einem Fehlerfall zu begrenzen, d.h. eine Bewegung des Roboterarms 1 im Fehlerfall zu verringern. Dies wird insbesondere durch eine dynamische Anpassung der Stellgrößen U_{d,q} des Stromreglers 28 beispielsweise an den Arbeitsschritt des Workflows insbesondere einer medizinischen Applikation, an die Roboterpose und/oder die Lastparameter des am Industrieroboters R befestigten Endeffektors 33 realisiert. Hierbei ist auch eine Verkleinerung, wenn nicht gar Minimierung des Verfahrwegs im Fehlerfall des Industrieroboters R möglich.

Im Falle des vorliegenden Ausführungsbeispiels kann die Steuervorrichtung 19 derart eingerichtet sein, dass das roboterapplikationsspezifischen dynamischen Begrenzen des Wertes der Stellgrößen U_{d,q} des Stromreglers 28 beispielsweise auf einer erforderlichen Geschwindigkeit des Tool Center Points TCP des Industrieroboters R für die Applikation und/oder einem Arbeitsschritt während der Bewegung des Roboters R, einer aktuellen Pose des Industrieroboters R, einer Sicherheitsanforderung für die Applikation und/oder einem Arbeitsschritt während der Bewegung des Roboters R, dem Abstand d zum Lebewesen P, die insbesondere messtechnisch mittels der Abstandsmessvorrichtung 34 ermittelt wird, und/oder einem Arbeitsschritt während der Bewegung des Industrieroboters R, und/oder einem Lastparameter des am Industrieroboter R befestigten Endeffektors 33 zugrunde gelegt wird.

Die Steuervorrichtung 19 kann im Falle des vorliegenden Ausführungsbeispiels auch derart ausgeführt sein, dass sie zunächst eine Bahnplanung durchführt, um eine Bewegung des Industrieroboters R zu planen. Anschließend begrenzt sie den Wert der Stellgrößen U_{d,q} des Stromreglers 28 aufgrund der durchgeführten Bahnplanung.

Gegebenenfalls ist die Steuervorrichtung 19 derart ausgeführt, dass sie den Wert der Stellgrößen U_{d,q} des Stromreglers 28 während der Bewegung des Roboters R in Abhängigkeit von der Bahnplanung ändert.

Die Steuervorrichtung 19 kann aber auch derart ausgeführt sein, dass sie einen maximal benötigten Wert der Stellgrößen U_{d,q} des Stromreglers 28 aufgrund der Bahnplanung bestimmt, der insbesondere der höchsten Geschwindigkeitsanforderung der der Bahnplanung zugrunde gelegten Bewegung des Industrieroboters R oder des mit dem elektrischen Antrieb E bewegten Gliedes zugeordnet ist. Die Steuervorrichtung 19 insbesondere begrenzt dann den Wert der Stellgrößen U_{d,q} des Stromreglers 28 auf den maximal benötigten Wert vor der Durchführung der der Bahnplanung zugeordneten Bewegung des Industrieroboters R.

Im Rahmen dieser Begrenzung kann die Steuervorrichtung 19 auch derart eingerichtet sein, dass sie den für die Bahnplanung entsprechenden Wert der Stellgrößen U_{d,q} des Stromreglers 28 berechnet und während der Durchführung der der Bahnplanung zugeordneten Bewegung des Industrieroboters R oder des mit dem elektrischen Antrieb E bewegten Gliedes den Wert der Stellgrößen U_{d,q} des Stromreglers 28 während der Bewegung des Industrieroboters R dynamisch begrenzt, also entsprechend der Bewegung die Begrenzung variiert.

Je nach Applikation kann die Steuervorrichtung 19 auch eingerichtet sein, der Wert der Stellgrößen U_{d,q} des Stromreglers 28 auf einen Maximalwert aufgrund einer maximal zulässigen Geschwindigkeit der der Bewegung zugeordneten Applikation vor der Bewegung des Industrieroboters R zu begrenzen. Dieser Maximalwert wird während der Bewegung nicht überschritten.

Die Anpassung der Stellgrößen U_{d,q} des Stromreglers 28 durch die Steuervorrichtung 19 kann beispielsweise auch folgendermaßen erfolgen:
Vor Beginn einer medizinischen Operation des Lebewesens P mit dem Industrieroboters R mittels des Endeffektors 33 wird die Sicherheitsanforderung, beispielsweise der Verfahrweg im Fehlerfall, für die aktuelle Applikation und deren Arbeitsschritte beispielsweise in Form einer Tabelle in sicherer Technik an die Steuervorrichtung 19 übermittelt. Ebenso werden die Lastdaten des verwendeten Endeffektors 33 insbesondere in sicherer Technik an die Steuervorrichtung 19 übergeben.

Während der Operation werden insbesondere in sicherer Technik die Gelenkwinkel des Industrieroboters R erfasst und sowohl der momentan befestigte Endeffektor 33 als auch der Arbeitsschritt im Applikations-Workflow identifiziert. Diese Daten werden insbesondere in sicherer Technik an die Steuervorrichtung 19 übermittelt.

Es ist auch möglich, sowohl den Wert der Stellgrößen U_{d,q} als auch den Wert der Führungsgröße I_{q} des Stromreglers 28 applikationsspezifisch dynamisch zu begrenzen. Unter Stellgrößen U_{d,q} des Stromreglers 28 soll auch der Wert des Ausgangssignals des Transformationsblocks 30 verstanden sein.

## Patentansprüche

1. Verfahren zum Betreiben eines medizinischen Roboters
**dadurch gekennzeichnet, dass** der medizinische Roboter eine Sicherheitssteuerung und wenigstens ein Glied (6-9) aufweist, das gesteuert von einer Steuervorrichtung (19) des Roboters (R) mittels eines geregelten elektrischen Antriebs (E) bewegbar ist, wobei der geregelte elektrische Antrieb (E) einen zumindest indirekt mit dem Glied (6-9) mechanisch gekoppelten Elektromotor (11-14), ein den Elektromotor (11-14) ansteuerndes Stellglied (15-18) und eine das Stellglied (15-18) ansteuernde Regelvorrichtung (28) umfasst, das Verfahren aufweisend ein roboterapplikationsspezifisches dynamisches Begrenzen des Wertes der Führungs- (I_{q}) und/oder Stellgröße (U_{d,q}) der Regelvorrichtung (28) und aufweisend folgende Verfahrensschritte:
- Übermitteln einer für eine aktuelle Applikation und deren Arbeitsschritte erforderlichen Kraftkapazität und Sicherheitsanforderung in sicherer Technik an die Sicherheitssteuerung,
- Durchführen einer Bahnplanung mittels der Steuervorrichtung (19) des Roboters (R), um eine Bewegung des Roboters (R) zu planen, und
- Begrenzen des Werts der Führungs- (I_{q}) und/oder Stellgröße (U_{d,q}) der Regelvorrichtung (28) aufgrund der von der Steuervorrichtung (19) durchgeführten Bahnplanung unter Berücksichtigung der erforderlichen Kraftkapazität und der Sicherheitsanforderung.

2. Verfahren nach Anspruch 1, bei dem die Führungsgröße (I_{q}) dem zum Bewegen des Elektromotors (11-14) vorgesehenen elektrischen Strom (i_{1,2,3}) zugeordnet ist.

3. Verfahren nach Anspruch 1 oder 2, bei der das Stellglied (15-18) eine elektrische Spannung zum Antreiben des Elektromotors (11-14) erzeugt und die Stellgröße (U_{d,q}) der Regelvorrichtung (28) dieser elektrischen Spannung zugeordnet ist.

4. Verfahren nach einem der Ansprüche 1 bis 3, bei dem der geregelte elektrische Antrieb (E) eine innere und eine äußere Regelschleife umfasst und die Regelvorrichtung (28) Teil der inneren Regelschleife ist.

5. Verfahren nach einem der Ansprüche 1 bis 4,
- bei dem der Elektromotor ein Wechselstrommotor (11-14), insbesondere ein Drehstrommotor und/oder ein Synchronmotor, insbesondere ein permanent erregter Synchronmotor ist, und insbesondere der geregelte Antrieb (E) auf der feldorientierten Regelung basiert, und/oder
- bei dem der Elektromotor (11-14) ein Gleichstrommotor ist und der geregelte elektrische Antrieb insbesondere auf dem Stromleitverfahren basiert.

6. Verfahren nach einem der Ansprüche 1 bis 5, aufweisend Bestimmen eines aufgrund der Bahnplanung maximal benötigten Wertes der Führungs- (I_{q}) und/oder Stellgröße (U_{d,q}) der Regelvorrichtung (28), der insbesondere die höchste Geschwindigkeitsanforderung der der Bahnplanung zugrunde gelegten Bewegung des Roboters (R) oder des mit dem elektrischen Antrieb (E) bewegten Gliedes zugeordnet ist, und Begrenzen des Wertes der Führungs- (I_{q}) und/oder Stellgröße (U_{d,q}) der Regelvorrichtung (28) auf den maximal benötigten Wert der Führung- (I_{q}) und/oder Stellgröße (U_{d,q}) der Regelvorrichtung (28) vor der Durchführung der der Bahnplanung zugeordneten Bewegung des Roboters (R).

7. Verfahren nach Anspruch 6, aufweisend Berechnen für die Bahnplanung entsprechende Werte Führung- (I_{q}) und/oder Stellgröße (U_{d,q}) der Regelvorrichtung (28) und während der Durchführung der der Bahnplanung zugeordneten Bewegung des Roboters (R) oder des mit dem elektrischen Antrieb (E) bewegten Gliedes, entsprechend Begrenzen des Wertes der Führung- (I_{q}) und/oder Stellgröße (U_{d,q}) der Regelvorrichtung (28) während der Bewegung.

8. Verfahren nach einem der Ansprüche 1 bis 7, aufweisend Begrenzen des Wertes der Führung- (I_{q}) und/oder Stellgröße (U_{d,q}) der Regelvorrichtung (28) auf einen Maximalwert aufgrund einer maximal zulässigen Nutzlast und/oder Geschwindigkeit der der Bewegung zugeordneten Applikation vor der Bewegung.

9. Verfahren nach einem der Ansprüche 1 bis 8, bei dem das roboterapplikationsspezifische dynamische Begrenzen des Wertes der Führungs- (I_{q}) und/oder Stellgröße (U_{d,q}) der Regelvorrichtung (28) einer erforderlichen Geschwindigkeit eines Tool Center Points (TCP) des Roboters (R) für die Applikation und/oder einem Arbeitsschritt während der Bewegung des Roboters (R), einer aktuellen Pose des Roboters (R), einer Sicherheitsanforderung für die Applikation und/oder einem Arbeitsschritt während der Bewegung des Roboters (R), einem Abstand (d) zu einer kritischen externen Struktur, der insbesondere messtechnisch ermittelt wird, einer erforderlichen Kraftkapazität für die Applikation und/oder einem Arbeitsschritt während der Bewegung des Roboters (R), und/oder einem Lastparameter eines am Roboter (R) befestigten Instruments (33) zugeordnet ist.

10. Medizinischer Roboter : **dadurch gekennzeichnet, dass** der medizinische Roboter eine Sicherheitssteuerung und wenigstens ein Glied (6-9) aufweist, das gesteuert von einer Steuervorrichtung (19) des Roboters (R) mittels eines geregelten elektrischen Antriebs (E) bewegbar ist, wobei der geregelte elektrische Antrieb (E) einen zumindest indirekt mit dem Glied (6-9) mechanisch gekoppelten Elektromotor (11-14), ein den Elektromotor (11-14) ansteuerndes Stellglied (15-18) und eine das Stellglied (15-18) ansteuernde Regelvorrichtung (28), deren Führungsgröße insbesondere eine dem elektrischen Strom des Elektromotors zugeordnete ist, aufweist, und die Steuervorrichtung eingerichtet ist, den Wert der Führungs- (I_{q}) und/oder Stellgröße (U_{d,q}) der Regelvorrichtung (28) gemäß dem Verfahren nach einem der Ansprüche 1 bis 9 roboterapplikationsspezifisch dynamisch zu begrenzen.

11. Roboter nach Anspruch 10, aufweisend einen Roboterarm (1) mit dem Glied (15) und weiteren, nacheinander folgenden, mittels Gelenken (2-5) verbundenen Gliedern (6-9), sowie weitere dem geregelten elektrischen Antrieb (E) entsprechende elektrische Antriebe, deren Elektromotoren mit den restlichen Gliedern (6-9) zumindest indirekt mechanisch gekoppelt sind und die Steuervorrichtung (19) eingerichtet ist, die Werte der Führungs- (I_{q}) und/oder Stellgrößen (U_{d,q}) der Regelvorrichtungen (28) der weiteren geregelten elektrischen Antrieben (E) gemäß dem Verfahren nach einem der Ansprüche 1 bis 9 roboterapplikationsspezifisch dynamisch zu begrenzen.

## Claims

1. A method of operating a medical robot,
**characterised in that** the medical robot comprises a safety controller and at least one member (6-9) which is movable under the control of a control device (19) of the robot (R) by means of a regulated electric drive (E), wherein the regulated electric drive (E) comprises an electric motor (11-14) which is, at least indirectly, mechanically coupled to the member (6-9), an actuating element (15-18) which controls the electric motor (11-14), and a regulating device (28) which controls the actuating element (15-18), wherein the method comprises a robot application-specific dynamic limiting of the value of the command variable (l_{q}) and/or of the actuating variable (U_{d,q}) of the regulating device (28), and comprises the following method steps:
- transmitting to the safety controller, in secure technology, a force capacity and a safety requirement which are required for a current application and its process steps,
- carrying out path planning by means of the control device (19) of the robot (R) in order to plan a movement of the robot (R), and
- limiting the value of the command variable (I_{q}) and/or of the actuating variable (U_{d,q}) of the regulating device (28) on the basis of the path planning carried out by the control device (19), taking into account the required force capacity and the safety requirement.

2. The method according to claim 1, in which the command variable (l_{q}) is associated with the electrical current (i_{1,2,3}) which is provided in order to move the electric motor (11-14).

3. The method according to claim 1 or 2, in which the actuating element (15-18) generates an electrical voltage in order to drive the electric motor (11-14) and in which the actuating variable (U_{d,q}) of the regulating device (28) is associated with this electrical voltage.

4. The method according to any one of the claims 1 to 3, in which the regulated electric drive (E) comprises an inner and an outer control loop and the regulating device (28) forms part of the inner control loop.

5. The method according to any one of the claims 1 to 4,
- in which the electric motor is an AC motor (11-14), in particular a three-phase motor and/or a synchronous motor, in particular a permanently excited synchronous motor, and in particular wherein the regulated drive (E) is based on the field-oriented control, and/or
- in which the electric motor (11-14) is a direct current motor, and in particular wherein the regulated electric drive is based on the current conduction method.

6. The method according to any one of the claims 1 to 5, wherein the method comprises determining a value of the command variable (l_{q}) and/or of the actuating variable (U_{d,q}) of the regulating device (28) which, on the basis of the path planning, is maximally required, and in particular which is associated with the highest speed requirement of the movement of the robot (R) or of the member moved by means of the electric drive (E) on which the path planning is based, and limiting the value of the command variable (l_{q}) and/or of the actuating variable (U_{d,q}) of the regulating device (28) to the maximum required value of the command variable (l_{q}) and/or of the actuating variable (U_{d,q}) of the regulating device (28) before the execution of the movement of the robot (R) which is associated with the path planning.

7. The method according to claim 6, comprising calculating respective values of the command variable (l_{q}) and/or of the actuating variable (U_{d,q}) of the regulating device (28) for the path planning and, during the execution of the movement of the robot (R) or of the member moved by means of the electric drive (E) which is associated with the path planning, limiting, in a corresponding manner, the value of the command variable (l_{q}) and/or of the actuating variable (U_{d,q}) of the regulating device (28) during the movement.

8. The method according to any one of the claims 1 to 7, comprising, before the movement, limiting the value of the command variable (l_{q}) and/or of the actuating variable (U_{d,q}) of the regulating device (28) to a maximum value on the basis of a maximum permissible payload and/or speed of the application which is associated with the movement.

9. The method according to any one of the claims 1 to 8, in which the robot application-specific dynamic limiting of the value of the command variable (l_{q}) and/or of the actuating variable (U_{d,q}) of the regulating device (28) is associated with a required speed of a tool centre point (TCP) of the robot (R) for the application and/or a process step during the movement of the robot (R), a current pose of the robot (R), a safety requirement for the application and/or a process step during the movement of the robot (R), a distance (d) to a critical external structure, which distance (d) is determined in particular by measurement, a required force capacity for the application and/or a process step during the movement of the robot (R), and/or a load parameter of an instrument (33) which is attached to the robot (R).

10. A medical robot, **characterized in that** the medical robot comprises a safety controller and at least one member (6-9) which is movable under the control of a control device (19) of the robot (R) by means of a regulated electric drive (E), wherein the regulated electric drive (E) comprises an electric motor (11-14) which, at least indirectly, is mechanically coupled to the member (6-9), an actuating element (15-18) which controls the electric motor (11-14), and a regulating device (28) which controls the actuating element (15-18) and whose command variable is in particular one which is associated with the electrical current of the electric motor, and wherein the control device is set up to dynamically limit the value of the command variable (l_{q}) and/or of the actuating variable (U_{d,q}) of the regulating device (28) in accordance with the method according to any one of the claims 1 to 9 in a manner which is specific to the robot application.

11. The robot according to claim 10, comprising a robot arm (1) comprising the member (15) and further successive members (6-9) which are connected by means of joints (2-5), as well as further electric drives which correspond to the regulated electric drive (E) and the electric motors of which are, at least indirectly, mechanically coupled to the remaining members (6-9), and the control device (19) of which is set up to dynamically limit the values of the command variables (I_{q}) and/or of the actuating variables (U_{d,q}) of the regulating devices (28) of the further regulated electric drives (E) in accordance with the method according to any one of the claims 1 to 9 in a manner which is specific to the robot application.

## Revendications

1. Procédé de fonctionnement d'un robot médical
**caractérisé en ce que** le robot médical présente une commande de sécurité et au moins un organe (6-9), qui peut être déplacé commandé par un dispositif de commande (19) du robot (R) au moyen d'un entraînement (E) électrique régulé, dans lequel l'entraînement (E) électrique régulé comprend un moteur électrique (11-14) couplé mécaniquement au moins indirectement avec l'organe (6-9), un organe de réglage (15-18) commandant le moteur électrique (11-14) et un dispositif de régulation (28) commandant l'organe de réglage (15-18), le procédé présentant une limitation dynamique spécifique à l'application de robot de la valeur de la grandeur de guidage (I_{q}) et/ou grandeur de réglage (U_{d, q}) du dispositif de régulation (28) et présentant les étapes de procédé suivantes :
- transmission d'une capacité de force requise pour une application actuelle et ses étapes de travail et d'une exigence de sécurité selon une technique sûre à la commande de sécurité,
- réalisation d'une planification de trajectoire au moyen du dispositif de commande (19) du robot (R) afin de planifier un déplacement du robot (R), et
- limitation de la valeur de la grandeur de guidage (I_{q}) et/ou grandeur de réglage (U_{d, q}) du dispositif de régulation (28) en raison de la planification de trajectoire réalisée par le dispositif de commande (19) en tenant compte de la capacité de force requise et de l'exigence de sécurité.

2. Procédé selon la revendication 1, dans lequel la grandeur de guidage (I_{q}) est associée au courant électrique (i_{1, 2, 3}) prévu pour le déplacement du moteur électrique (11-14).

3. Procédé selon la revendication 1 ou 2, dans lequel l'organe de réglage (15-18) génère une tension électrique pour l'entraînement du moteur électrique (11-14) et la grandeur de réglage (U_{d, q}) du dispositif de régulation (28) est associé à cette tension électrique.

4. Procédé selon l'une quelconque des revendications 1 à 3, dans lequel l'entraînement (E) électrique régulé comprend une boucle de régulation intérieure et une boucle de régulation extérieure et le dispositif de régulation (28) fait partie de la boucle de régulation intérieure.

5. Procédé selon l'une quelconque des revendications 1 à 4,
- dans lequel le moteur électrique est un moteur à courant alternatif (11-14), en particulier un moteur triphasé et/ou un moteur synchrone, en particulier un moteur synchrone à excitation permanente, et en particulier l'entraînement (E) régulé se base sur la régulation à champ orienté,
et/ou
- dans lequel le moteur électrique (11-14) est un moteur à courant continu et l'entraînement électrique régulé se base en particulier sur le procédé de conduction de courant.

6. Procédé selon l'une quelconque des revendications 1 à 5, présentant la détermination d'une valeur maximum nécessaire en raison de la planification de trajectoire de la grandeur de guidage (I_{q}) et/ou grandeur de réglage (U_{d, q}) du dispositif de régulation (28), à laquelle est associée en particulier l'exigence de vitesse la plus élevée du déplacement basé sur le planification de trajectoire du robot (R) ou de l'organe déplacé avec l'entraînement (E) électrique, et la limitation de la valeur de la grandeur de guidage (I_{q}) et/ou grandeur de réglage (U_{d, q}) du dispositif de régulation (28) sur la valeur maximum nécessaire de la grandeur de guidage (I_{q}) et/ou grandeur de réglage (U_{d, q}) du dispositif de régulation (28) avant la réalisation du déplacement associé à la planification de trajectoire du robot (R).

7. Procédé selon la revendication 6, présentant le calcul de valeurs grandeur de guidage (I_{q}) et/ou grandeur de réglage (U_{d, q}) du dispositif de régulation (28) correspondantes pour la planification de trajectoire et pendant la réalisation du déplacement associé à la planification de trajectoire du robot (R) ou de l'organe déplacé avec l'entrainement (E) électrique, en fonction de la limitation de la valeur de la grandeur de guidage (I_{q}) et/ou grandeur de réglage (U_{d, q}) du dispositif de régulation (28) pendant le déplacement.

8. Procédé selon l'une quelconque des revendications 1 à 7, présentant la limitation de la valeur de la grandeur de guidage (I_{q}) et/ou grandeur de réglage (U_{d, q}) du dispositif de régulation (28) à une valeur maximum en raison d'une charge utile maximum admissible et/ou vitesse de l'application associée au déplacement avant le déplacement.

9. Procédé selon l'une quelconque des revendications 1 à 8, dans lequel la limitation dynamique spécifique à l'application de robot de la valeur de la grandeur de guidage (I_{q}) et/ou grandeur de réglage (U_{d, q}) du dispositif de régulation (28) est associée à une vitesse requise d'un Tool Center Point (TCP) du robot (R) pour l'application et/ou à une étape de travail pendant le déplacement du robot (R), à une posture actuelle du robot (R), à une exigence de sécurité pour l'application et/ou à une étape de travail pendant le déplacement du robot (R), à une distance (d) par rapport à une structure externe critique, qui est identifiée en particulier par métrologie, à une capacité de force requise pour l'application et/ou à une étape de travail pendant le déplacement du robot (R), et/ou à un paramètre de charge d'un instrument (33) fixé sur le robot (R).

10. Robot médical **caractérisé en ce que** le robot médical présente une commande de sécurité et au moins un organe (6-9), qui peut être déplacé commandé par un dispositif de commande (19) du robot (R) au moyen d'un entraînement (E) électrique régulé, dans lequel l'entraînement (E) électrique régulé présente un moteur électrique (11-14) couplé mécaniquement au moins indirectement avec l'organe (6-9), un organe de réglage (15-18) commandant le moteur électrique (11-14) et un dispositif de régulation (28) commandant l'organe de réglage (15-18), dont la grandeur de guidage est associée en particulier une au courant électrique du moteur électrique, et le dispositif de commande est aménagé pour limiter dynamiquement de manière spécifique à l'application de robot la valeur de la grandeur de guidage (I_{q}) et/ou grandeur de réglage (U_{d, q}) du dispositif de régulation (28) conformément au procédé selon l'une quelconque des revendications 1 à 9

11. Robot selon la revendication 10, présentant un bras de robot (1) avec l'organe (15) et d'autres organes (6-9) successifs reliés au moyen d'articulations (2-5), ainsi que d'autres entraînements électriques correspondant à l'entraînement (E) électrique régulé, dont les moteurs électriques sont couplés mécaniquement au moins indirectement avec les organes (6-9) restants et le dispositif de commande (19) est aménagé pour limiter dynamiquement de manière spécifique à l'application de robot les valeurs des grandeurs de guidage (I_{q}) et/ou grandeurs de réglage (U_{d, q}) des dispositifs de régulation (28) des autres entraînements (E) électriques régulés conformément au procédé selon l'une quelconque des revendications 1 à 9.
